# EUROPEAN PATENT APPLICATION

(11) **EP 4 790 511 A2**
(43) Date of publication of application: **12.08.2026**
(21) Application number: 26188086.8
(22) Date of filing: 13.09.2023
(51) Int. Cl.: G05D 1/648

(54) **BOUNDARY DEFINITION FOR AUTONOMOUS MACHINE WORK REGION**

(30) Priority: 14.09.2022 US 202263406524 P; 16.11.2022 US 202263425746 P
(62) Document number(s) of the earlier application(s) in accordance with Art. 76 EPC: 23783629.1 / 4 587 898
(71) Applicant: The Toro Company, Bloomington, MN 55420-1196 (US)
(72) Inventor: FRICK, Alexander Steven, Bloomington, 55420-1196 (US); KRAFT, Jason Thomas, Bloomington, 55420-1196 (US); JENNINGS, Brian William, Bloomington, 55420-1196 (US)
(74) Representative: J A Kemp LLP

(57) **Abstract**

A boundary of a work region is defined in which an autonomous machine is to operate. A dead zone is defined in the work region wherein a loss of a wireless geolocation service is known or predicted. A traversal pattern within the boundary is autogenerated. The autonomous machine executes the traversal pattern to perform work using the wireless geolocation service to navigate outside of the dead zone. When encountering the dead zone before, during, or after executing the traversal pattern, the machine prioritize a localization input that does not rely on the wireless geolocation service to perform the work in the dead zone.

## Description

### RELATED PATENT DOCUMENTS

This application claims the benefit of U.S. Provisional Application No. 63/406,524, filed on September 14, 2022, and U.S. Provisional Application No. 63/425,746, filed on November 16, 2022, both of which are incorporated herein by reference in their entireties.

### SUMMARY

The present disclosure is directed to apparatuses and methods that facilitate training or programming an autonomous work vehicle. In one embodiment, a method involves defining a boundary of a work region in which an autonomous machine is to operate. A dead zone is defined in the work region wherein a loss of a wireless geolocation service is known or predicted. A traversal pattern is autogenerated within the boundary, the traversal pattern encountering the dead zone. The autonomous machine executes the traversal pattern to perform work using the wireless geolocation service to navigate outside of the dead zone. When encountering the dead zone before, during, or after executing the traversal pattern, the machine performs the work in the dead zone using a local navigation mode that does not rely on the wireless geolocation service.

These and other features and aspects of various embodiments may be understood in view of the following detailed discussion and accompanying drawings.

### BRIEF DESCRIPTION OF THE DRAWINGS

The discussion below makes reference to the following figures, wherein the same reference number may be used to identify the similar/same component in multiple figures. The drawings are not necessarily to scale.
FIG. 1 is a diagram of an autonomous work vehicle according to an example embodiment;
FIGS. 2 and 3 are diagrams of work regions used by an autonomous work vehicle according to an example embodiment;
FIG. 4 is a diagram illustrating path planning communications with an operation center according to an example embodiment;
FIG. 5 is a diagram illustrating boundary determination according to an example embodiment;
FIGS. 6-8 are flowcharts showing methods according to example embodiments; and
FIG. 9 is a diagram showing automatic detection of boundaries using an electronic map according to an example embodiment.

### DETAILED DESCRIPTION

In the following detailed description of illustrative embodiments, reference is made to the accompanying figures of the drawing which form a part hereof. It is to be understood that other equivalent embodiments, which may not be described and/or illustrated herein, are also contemplated.

The present disclosure relates to autonomous work vehicles. Generally, an autonomous work vehicle can traverse a work area with a work implement performing a repetitive and/or tedious task. Examples of such tasks include mowing, snow removal, dispersing solids or liquids (e.g., salt, fertilizer, seed, water, herbicides, pesticides), soil treatment (e.g., aeration), cleaning, applying markings or coatings, etc. The autonomous vehicle is self-powered (e.g., internal combustion engine, battery, fuel cell) and selfguiding. The self-guidance of the machine may still involve human inputs, such as first defining the task to be performed and then instructing the machine to perform the task.

Embodiments described herein relate to autonomous machine navigation methods and systems to autonomously navigate and operate within a boundary of a work region, such as for lawn mowing, snow clearing, surface treatment, animal control, security, etc. The autonomous machine may be configured in different modes to carry out various navigation functions, such as training mode, offline mode, and online mode. The autonomous machine may define one or more boundaries of a work region using a vision system and geolocation services.

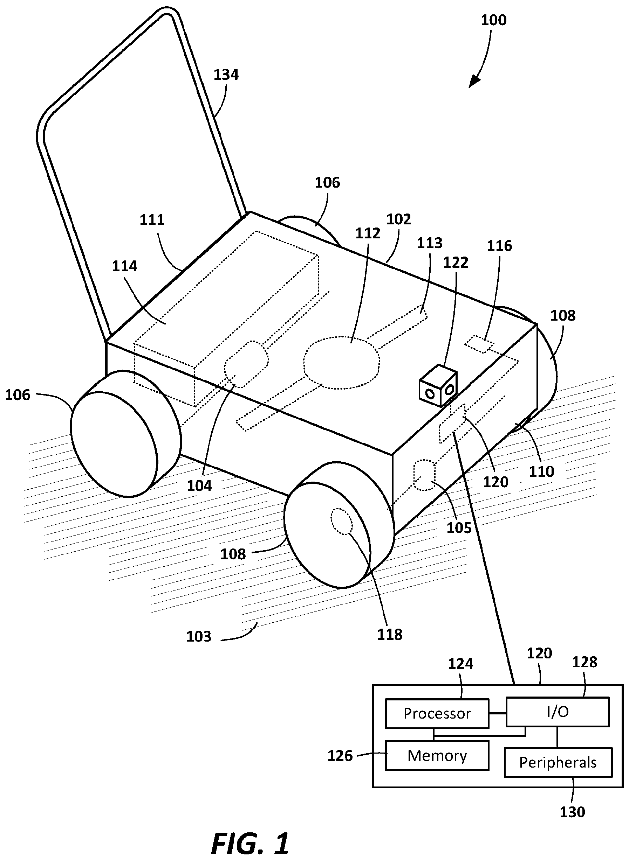

In FIG. 1, a simplified perspective view shows some features of an autonomous work vehicle 100 according to one or more embodiments. The autonomous work vehicle 100 example is an autonomous lawn mower, however other autonomous work vehicles may have analogous components that are similarly arranged. As shown in this view, the autonomous work vehicle 100 may include a housing 102 (e.g., frame or chassis with a shroud) that carries and/or encloses various components of the mower as described below. The autonomous work vehicle 100 may further include ground traversal members, such as wheels, rollers, or tracks. In the illustrated embodiment, ground traversal members shown includes one or more rear wheels 106 and one or more front wheels 108, that support and move the housing 102 upon a ground (e.g., grass) surface 103. As illustrated, the front wheels 108 are used to support a front end portion 110 of the housing 102 and the rear wheels 106 are used to support the rear end portion 111 of the housing.

One or both rear wheels 106 may be driven by a propulsion system (e.g., including one or more electric wheel motors 104) to propel the autonomous work vehicle 100 over the ground surface 103. In some embodiments, the front wheels 108 may freely caster relative to the housing 102 (e.g., about vertical axes). In such a configuration, mower direction may be controlled via differential rotation of the two rear wheels 106 in a manner similar to a conventional zero-turn-radius (ZTR) riding mower. For example, the propulsion system may include a separate wheel motor 104 for each of a left and right rear wheel 106 so that speed and direction of each rear wheel may be independently controlled. In addition, or alternatively, the front wheels 108 could be actively steerable by the propulsion system (e.g., including one or more steer motors 105) to assist with control of autonomous work vehicle 100 direction, and/or could be driven by the propulsion system (i.e., to provide a front-wheel or all-wheel drive mower).

An implement (e.g., a grass cutting element, such as a blade 113) may be coupled to an implement motor 112 (e.g., cutting motor) carried by the housing 102. When the motors 112 and 104 are energized, the autonomous work vehicle 100 may be propelled over the ground surface 103 such that vegetation (e.g., grass) over which the mower passes is cut by the blade 113. While illustrated herein using only a single blade 113 and/or motor 112, mowers incorporating multiple blades, powered by single or multiple motors, are contemplated. Moreover, while described herein in the context of one or more conventional "blades," other cutting elements may include, for example, disks, nylon string or line elements, knives, cutting reels, etc. Still further, embodiments combining various cutting elements, e.g., a rotary blade with an edge-mounted string trimmer, are also contemplated.

The autonomous work vehicle 100 may further include a power source, which in one embodiment, is a battery 114 having a lithium-based chemistry (e.g., lithiumion). Other embodiments may utilize batteries of other chemistries, or other power source technologies (e.g., solar power, fuel cell, internal combustion engines) altogether. It is further noted that, while shown as using independent blade and wheel motors, such a configuration is illustrative only as embodiments wherein blade and wheel power is provided by a single motor are also contemplated.

The autonomous work vehicle 100 may further include one or more sensors 116 to provide location data. For instance, some embodiments may include a global positioning system (GPS) receiver (or other position sensor that may provide similar data) that is adapted to estimate a position of the autonomous work vehicle 100 within a work region and provide such information to a controller 120 (described below). In other embodiments, one or more of the wheels 106, 108 may include encoders 118 that provide wheel rotation/speed information that may be used to estimate mower position (e.g., based upon an initial start position) within a given work region. The sensors 116 may include a boundary wire detector, e.g., via ground penetrating radar, sonar, lidar, radio-frequency identification (RFID), etc. The boundary wire detector could be used in addition to other navigational techniques described herein.

The sensors 116 may include front obstacle detection sensors, rear obstacle detection sensors, side obstacle detection sensors, or other proximity detectors. The obstacle detection sensors may be used to detect an obstacle in the path of the autonomous work vehicle 100 when travelling in a forward or reverse direction, respectively. The autonomous work vehicle 100 may be capable of mowing while moving in either direction Although not so illustrated, the obstacle detection sensors may be located at the front end portion 110 or rear end portion 111 of the autonomous work vehicle 100, respectively.

The obstacle detection sensors may use contact sensing, non-contact sensing, or both types of sensing. For example, both contact and non-contact sensing may be enabled concurrently or only one type of sensing may be used depending on the status of the autonomous work vehicle 100 (e.g., within a zone or travelling between zones). One example of contact sensing includes using a contact bumper protruding from the housing 102, or the housing itself, that can detect when the autonomous work vehicle 100 has contacted the obstacle. Non-contact sensors may use acoustic or light waves to detect the obstacle, sometimes at a distance from the autonomous work vehicle 100 before contact with the obstacle, e.g., using infrared, radio detection and ranging (radar), light detection and ranging (lidar), sound detection and ranging (sonar), etc.

The autonomous work vehicle 100 may include one or more vision-based sensors to provide localization data, such as position, orientation, or velocity. The vision-based sensors may include one or more cameras 122 that capture or record images for use with a vision system. The cameras 122 may be described as part of the vision system of the autonomous work vehicle 100. Types of images include, for example, training images and/or operational images.

The one or more cameras 122 may be capable of detecting visible light, non-visible light, or both. The one or more cameras 122 may establish a total field of view of at least 30 degrees, at least 45 degrees, at least 60 degrees, at least 90 degrees, at least 120 degrees, at least 180 degrees, at least 270 degrees, or even at least 360 degrees, around the autonomous machine (e.g., autonomous work vehicle 100). The field of view may be defined in a horizontal direction, a vertical direction, or both directions. For example, a total horizontal field of view may be 360 degrees, and a total vertical field of view may be 45 degrees. The field of view may capture image data above and below the height of the one or more cameras.

In some embodiments, the autonomous work vehicle 100 includes four cameras 122. The cameras 122 may each be facing a different direction, including a forward direction, a reverse direction, a first side direction, and a second side direction (e.g., cardinal directions relative to the autonomous work vehicle 100). One or more camera directions may be positioned orthogonal to one or more other cameras 122 or positioned opposite to at least one other camera 122. The cameras 122 may also be offset from any of these directions (e.g., at a 45 degree or another non-right angle). In some embodiments, fewer than four cameras 122 may be used to generate images from four different directions. For example, a single camera may rotate about a vertical axis to obtain four different images in the forward, reverse, and side directions.

The autonomous work vehicle 100 may be guided along a path, for example, pushing, driving, or towing using manual controls such as handle assembly 134. For example, manual direction of the autonomous work vehicle 100 may be used during a training mode to learn a work region and/or a boundary associated with the work region. The handle assembly 134 may extend outward and upward from a rear end portion 111 of the autonomous work vehicle 100. Other types of manual controls may be used for different vehicle configurations, e.g., steering wheels and pedals for ridable vehicles, wired or wireless controllers, tow handles, etc.

The camera 122 positioned in a forward direction may have a pose that represents the pose of the autonomous machine. The pose may be a six-degree of freedom pose, which may include all position and orientation parameters for a three-dimensional space. In some embodiments, the position and orientation of the cameras may be defined relative to a geometric center of the autonomous work vehicle 100 or relative to one of the edges of the autonomous work vehicle 100.

Sensors of the autonomous work vehicle 100 may also be described as either vision-based sensors and non-vision-based sensors. Vision-based sensors may include cameras 122 that are capable of recording images. The images may be processed and used to build a 3D point cloud (3DPC) and/or used for optical odometry (e.g., optical encoding). Non-vision-based sensors may include any sensors that are not cameras 122. For example, a wheel encoder 118 that uses optical (e.g., photodiode), magnetic, and/or capacitive sensing to detect wheel revolutions may be described as a non-vision-based sensor that does not utilize a camera. Wheel encoding data from a wheel encoder may be also described as odometry data. In some embodiments, non-vision-based sensors do not include a boundary wire detector. In some embodiments, non-vision-based sensors receive signals from wireless geolocation service, such as from a GPS satellite or other transceiver. These sensors may also be grouped as providing a localization input that does not rely on the wireless geolocation service. Those localization inputs may include vision-based inputs, encoders, boundary wire detectors, bump/collision sensors, wireless proximity sensors, etc.

The autonomous work vehicle 100 may also include a controller 120 operable to monitor and control various mower functions. As seen in the block diagram at the bottom of FIG. 1, the controller 120 may include one or more processors 124 that receive various inputs and executes one or more computer programs or applications stored in memory 126. One or both of the processor 124 and memory 126 are coupled to input/output (I/O) circuitry 128. The I/O circuitry facilitates onboard communications between peripheral components 130, e.g., network adapters, user interfaces, sensors, etc. The I/O circuitry 128 may also facilitate communication with off-board devices such as motor controller, sensors, cameras 122, lights (not shown) etc. The off-board communication can use bus media and protocols such as controller area network (CAN), inter-integrated circuit (I2C), universal serial bus (USB), etc.

The memory 126 may include any volatile, non-volatile, magnetic, optical, and/or electrical media, such as a random-access memory (RAM), read-only memory (ROM), non-volatile RAM (NVRAM), electrically-erasable programmable ROM (EEPROM), flash memory, and/or any other digital media. While shown as both being incorporated into the controller 120, the memory 126 and the processor 124 could be contained in separate modules.

The processor 124 may include any one or more of a microprocessor, a controller, a digital signal processor (DSP), an application specific integrated circuit (ASIC), a field-programmable gate array (FPGA), and/or equivalent discrete or integrated logic circuitry. In some embodiments, the processor 124 may include multiple components, such as any combination of one or more microprocessors, one or more controllers, one or more DSPs, one or more ASICs, and/or one or more FPGAs, as well as other discrete or integrated logic circuitry. The functions attributed to the controller 120 and/or processor 124 herein may be embodied as software, firmware, hardware, or any combination of these. Certain functionality of the controller 120 may also be performed in the cloud or other distributed computing systems operably connected to the processor 124.

The memory 126 may include computer-readable instructions or applications that, when executed, e.g., by the processor, cause the controller 120 to perform various calculations and/or issue commands. The processor 124 and memory 126 may together define a computing apparatus operable to process input data and generate the desired output to one or more components/devices.

The controller 120 may use the processor and memory in various different systems. In particular, one or more processors and memory may be included in each different system. In some embodiments, the controller 120 may at least partially define a vision system, which may include a processor and memory. The controller 120 may also at least partially define a navigation system, which may include a processors and memory separate from the processor and memory of the vision system.

Each system may also be described as having its own controller 120. For example, the vision system may be described as including one controller 120 and the navigation system may be described as having another controller 120. As such, the autonomous work vehicle 100 may be described as having multiple controllers 120. In general, as used herein, the term "controller" may be used to describe components of a "system" that provide commands to control various other components of the system.

Embodiments below relate to training an autonomous machine to traverse a work region. Generally, a machine will have a predefined work region that is traversed to perform work. In outdoor applications, the user will typically assist the autonomous machine in learning the boundaries and keep out areas. While some outdoor boundaries such as fences, sidewalks, trees, can be detected by sensors of the autonomous machine, other boundaries such as properties lines may not have any features that can be detected by the autonomous machine, and so will need to be taught or input to the machine by the user. Also, a work region may comprise multiple non-contiguous sub-regions that each need to have boundaries defined as well as defining a safe traversal path between regions, and the user may be best suited to select these traversal paths.

Although it is expected that current autonomous work machines may require some level of user input to define work regions, this type of instruction could be complicated or tedious for the casual user. For example, the user may guide the autonomous machine around the work area to define the boundaries and gather navigation data. For machines that include vision-based navigation capabilities, this may involve capturing images during the guided traversal that can be compiled into a navigation database. This navigation database may include image features and a three-dimensional point cloud (3DPC) that can be referenced during autonomous operations by comparing live image data with corresponding data in the database.

User-guided traversal can be effective in defining boundaries, as the user can make an up-close determination of conditions that they might not otherwise considered until they actually try guiding the autonomous machine. For example, obstacles or potential stuck areas such as sinkholes, narrow passageways, steep grades, etc., may not appear to be problematic at first glance but become apparent when trying to manually push the machine through these areas. On the downside, user guided traversal of the machine can be time consuming and tedious, such as for very large work areas and work areas with few obstacles and/or simple boundaries.

Other ways of defining the work regions include using an electronic/digital map. Generally, a digital map may use a data with a combination of cartographic data (e.g., geological reference points) and imagery (e.g., photographs from satellites and aircraft). A digital map presents man made or natural geographic features (e.g., roads, buildings, property lines, rivers, hills, etc.) on a computer screen in a two-dimensional (2D) or three-dimensional (3D) rendering. Using a digital map, a user can define boundaries and keep out areas using computer inputs, such as graphical tools for defining graphical elements such as lines, curves, closed shapes, etc. The extents of these graphical elements can be translated into geographic coordinates (e.g., latitude and longitude) which are used to find the actual extents on the property. Geolocation systems such as GPS, realtime kinetic (RTK) positioning can be used on the autonomous machine to sense the location of the machine and thereby traverse paths defined via the digital maps.

While defining work region features using digital maps can be convenient for large areas, it has its own disadvantages. For example, it may not be as accurate as a manual traversal of the autonomous machine under the guidance of the user. While some geolocation systems can be quite accurate (e.g., within a few centimeters) there are still possibilities for errors in the selection of areas on a map, which might not have the resolution to show small obstacles and features. Also, for users that are less computer savvy, a computer aided drafting (CAD) type interface used to define boundaries and other features may be difficult to learn. On some device, e.g., mobile devices with touchscreens, it may be difficult to finely place points on the map, e.g., using finger inputs.

Some autonomous devices, such as robotic vacuum cleaners, may be able to self-define work regions through autonomous exploration, as the boundaries (e.g., walls, furniture) can be relatively easy to detect and the penalties for mistakes (e.g., getting stuck, falling downstairs) may not be severe. This may not be the case for outdoor work areas, which may have more complicated and difficult hazards to overcome.

In embodiments detailed below, methods and systems are described that can use different techniques to define a work area that combines different aspects of boundary definition techniques described above such that the work region can be conveniently defined with sufficiently accuracy that the autonomous machine can subsequently work in the region without supervision. These methods and systems take into account navigation accuracy considerations as well as relative strengths and weaknesses of different navigation modes (e.g., geolocation, image-based location, dead-reckoning, etc.).

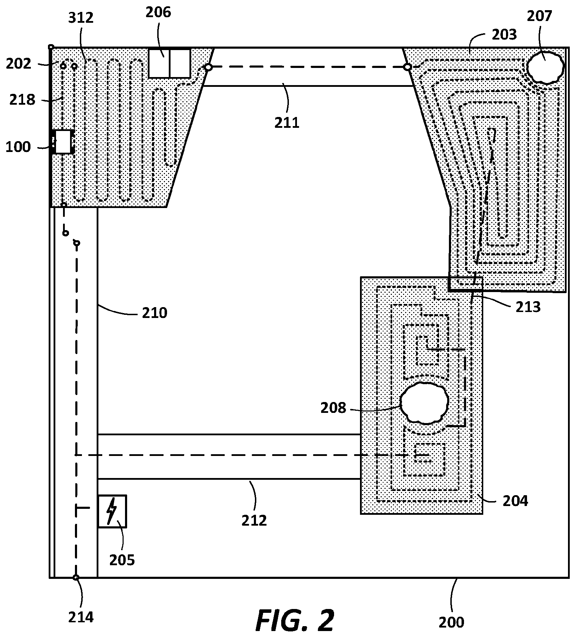

For purposes of the following discussion, various concepts of the work region 200 will be described, as shown in the diagram of FIG. 2. A boundary is defined, or determined, around the work region 200. In some embodiments, the autonomous work vehicle 100 may traverse random, semi-random, or planned paths to perform work in work zones 202-204 within the work region 200. The work zones 202-204 may represent an outdoor area or maintenance area, such as a lawn. The autonomous work vehicle 100 may travel through the work region 200 along a number of paths to sufficiently cover area in the work zones 202-204, e.g., to cut all the grass in each zone 202-204. The autonomous work vehicle 100 may recharge as needed, for example, when transitioning between zones 202-204. A recharging base, docking station, or base station 205 may be located within or along the work region 200.

Boundaries may be used to define the work region 200 and the various zones 202-204 within the work region 200. The boundary may be defined manually, or automatically, using a training mode of the autonomous work vehicle 100. In addition, some of the boundaries may also be defined using a fixed property boundary or other type of boundary. In some embodiments, the boundary may be defined by directing the autonomous work vehicle 100 along the work region 200, such as along a desired boundary path of the work region 200 in a training mode.

Other boundaries may be used to define an exclusion zone (also referred to as a keep out zone). An exclusion zone may represent an area of the work region 200 for the autonomous work vehicle 100 to avoid or travel around. For example, an exclusion zone may contain an obstacle 206-208 (such as a landscaped garden) or problem area (such as a steep slope). The exclusion zone may also represent an area that is traversable, but that is not traversed while working, e.g., areas of dirt, concrete, gravel, etc. Other boundaries may be used to define transit zones 210-212, which may also be described as a transit path. These zones 210-212 may also be defined as paths irrespective of boundaries, as indicated by the dashed lines in the zones 210-212.

In general, a transit zone 210-212 or transit path is a zone or path connecting two other zones, such as transit zone 211 that connects work zones 202 and 203. A transit path 213 is also shown that connects work zones 203 and 204 but does not necessarily have a specified zone boundary. A transit zone may also be defined between a point in the work region and a "home" location or recharger (e.g., base station 205). A maintenance task may or may not be performed in the transit zones. For example, the autonomous work vehicle 100 may not mow grass in a transit zone.

The work region 200 may be fully or partially mapped with a terrain map. For example, the terrain map may be developed during a training mode of the mower, or during subsequent mowing operations. Regardless, the terrain map may contain information about the terrain of the work region 200, for example, elevation, grade, identified obstacles (e.g., permanent obstacles), identified stuck areas (e.g., areas the mower has gotten stuck whether due to grade or other traction conditions), or other information that may facilitate the ability of the autonomous work vehicle 100 to traverse the work region.

The resolution of points stored in the terrain map may be sufficient to provide useful elevation and/or grade information about the terrain in the work region 200 (e.g., on the order of feet or decimeters). For example, the resolution of points may correspond to spacing between points being less than or equal the width of the autonomous work vehicle 100. In some cases, different functions of path planning may use different levels of resolution. For example, path planning that maps work or exclusion zones may have the highest resolution (e.g., on the order of centimeters). In other words, the resolution of points proximate to, adjacent to, or near irregular boundaries or obstacles may have a finer granularity.

The autonomous work vehicle 100 may start coverage of the work region 200, e.g., starting at a boundary of the work region as indicated by point 214 or starting at the charger 205. The autonomous work vehicle 100 may determine a first zone 202. The zone 202 may be located adjacent to a boundary of the work region 200 or, as illustrated, may be located further within the work region 200. In other embodiments, the zone 202 may cover the entire work region 200. When the autonomous work vehicle 100 is finished mowing the zone 202, the mower may start another zone (e.g., zone 202, which may be dynamic or fixed) to continue mowing.

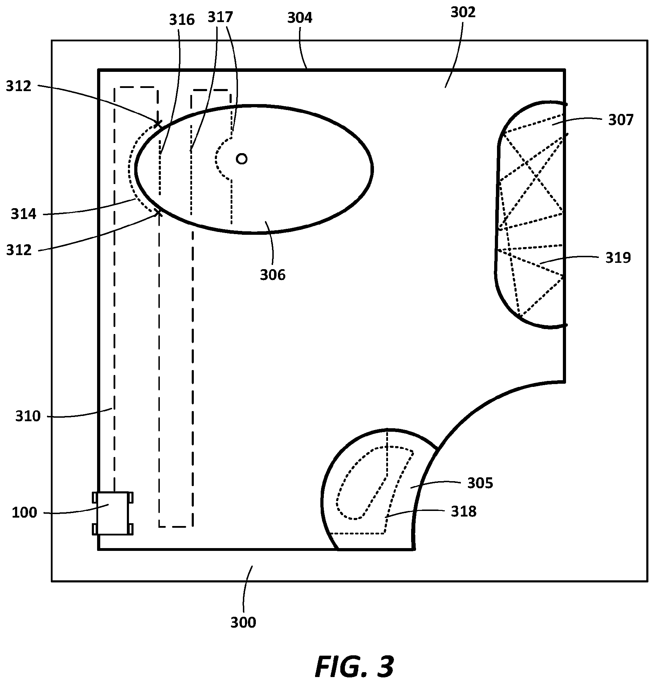

In one or more embodiments, it may be desirable for the autonomous work vehicle 100 to rely on wireless geolocation (e.g., GPS, RTK) as much as possible to navigate the work region 200. Wireless geolocation does not require significant electrical and/or processing power compared to visual navigation, and in some cases has more than sufficient accuracy. One issue that can be seen with wireless geolocation is that there may be regions where wireless geolocation does not work due to interference with the wireless signals. An example work region 300 that illustrates this is shown in the diagram of FIG. 3.

In this work region 300, a single work zone 302 is shown for which a boundary 304 is defined. This boundary 304 determines an area in which an autonomous machine 100 is to operate. Other boundaries (e.g., exclusion zones) may also be defined that govern operation of the autonomous machine 100 within the work region 300, but these other zones are not shown here. One or more dead zones 305, 306 are defined in the work region 300. Within the dead zones 305, 306 loss of a wireless geolocation service is known or predicted. There are various ways in which the dead zones 305, 306 can be determined, which will be described in greater detail below. For purposes of this example, it may be that the workplace boundary 304 and geometry of the dead zones 305, 306 is known, but that a traversal path through the work zone 302 has not yet been generated.

Generally, given the boundary 304, definition of the dead zones 305, 306, a work footprint of the autonomous machine 100, and a type of traversal path (e.g., columns, rows, concentric, custom pattern, random), a traversal pattern 310 can be autogenerated within the boundaries. The traversal pattern 310 encounters the dead zones 305, 306 and may plot a path through the dead zones 305, 306 or avoid explicitly defining paths through the dead zones 305, 306. Part of the traversal pattern 310 is shown in FIG. 3 where it encounters dead zone 306, and it may be assumed to continue, e.g., in a column-wise fashion, as shown throughout the zone 302 where it will also eventually encounter dead zone 305.

The navigation through the dead zone 306 during execution of the traversal pattern 310 may be performed in a number of ways. In one embodiment, the traversal pattern 310 may be plotted through the dead zone 306, where breakpoints 312 are shown at the border of the dead zone 306. In other embodiments, the traversal pattern 310 may be modified with a segment 314 that traverses the outer boundary of the of the dead zone 306. In this latter case, the dead zone 306 may be treated the same as an exclusion zone for purposes of path generation. The difference in this case from an exclusion zone is that the autonomous machine will eventually perform work in the dead zones 305, 306 (or may work the dead zones 305, 306 before working the traversal pattern or while working the traversal pattern 310).

Once the full traversal pattern 310 has been defined, the autonomous machine 100 executes the traversal pattern 310 to optionally train in the work zone 302 and eventually to perform work in the work zone 302. The traversal pattern 310 will be followed using the wireless geolocation service to navigate. When the encountering the dead zone 306 before, during, or after executing the traversal pattern 310, the autonomous machine 100 prioritizes (e.g., gives greater weighting to if already using, switches on if not already using, relies solely on, etc.) a local navigation mode and performs the work in the dead zone using a path 316 that joins the breakpoints 312 in the traversal pattern 310. The local navigation mode may include any type of navigation that does not rely on a wireless geolocation service such as GPS and RTK. For example, visual navigation using a locally stored 3DPC may be used. The local navigation data can use the same geographic coordinates used by the geolocation service and be anchored to the GPS/RTK coordinate system, such that the machine can still estimate geolocation within the dead zone even if GPS or RTK communication is lost. By reserving resource-intensive local navigation modes such as visual navigation for certain areas such as the dead zones, this can ease setup by reducing the amount of machine training needed, as well as more efficiently using power and computer resources during operation.

If the machine is configured to work through the dead zone 306 via path 316, 317, the autonomous machine 100 may switch to the local navigation mode at the edge of the dead zone 306 (as indicated by breakpoints 312) and attempt to remain on a path 316 that joins the breakpoints 312. When the path 316 in the dead zone 306 is completed, the autonomous machine 100 continues to execute the traversal pattern 310 to perform the work using the wireless geolocation service to navigate. This can be repeated for other paths 317 that span the boundaries of the dead zone 306, which connect other breakpoints in the traversal path 310.

In some cases, the dead zones 306, 305 may exhibit intermittent loss of connectivity to the geolocation services. In such a case, the reliance on the local navigation mode may occur only if the connectivity is lost or quality is below a threshold, and therefore would not occur in a specific location such as fixed breakpoints 312. Further, if higher precision geolocation (e.g., RTK) is lost but a lower precision geolocation (e.g., GPS) is available, the reliance on the local navigation mode may only be required if the higher precision is needed. For example, GPS may be sufficient for navigating using a random pattern such that the GPS is mostly relied upon to detect boundaries or obstacles.

If traversal pattern 310 uses avoidance segments 314 to work around the dead zone 306, then the autonomous machine 100 may finish the entire traversal pattern 310 without entering any dead zones 305-307, then navigate back to work the dead zones 305-307. Or the autonomous machine 100 may work the dead zones 305-307 before the traversal pattern 310. In both cases, the wireless geolocation service can be used to navigate to an edge of the dead zones 305-307 and then the local navigation mode is used to work in the dead zones 305-307. The dead zones 305-307 can be worked using any suitable pattern, such as a concentric path 318 shown in dead zone 305 or a random path 319 shown in dead zone 307.

Note that there may be many variations on the order in which the dead zones are worked. For example, if the traversal pattern 310 with avoidance segments 314 is used, the dead zones 305-307 could be worked the first time the autonomous machine 100 encounters the border of the dead zone 306 (e.g., at top break point 312), it could go to local navigation mode, work the dead zone 306 in a mode as described above, then resume the traversal pattern 310 at the same point it entered. The entry and working of the dead zone 306 could also be done any other time the autonomous machine 100 is at or near the border of the dead zone 306, and not just during the first encounter.

When moving through the dead zones 305, 306, the autonomous machine 100 may use a navigation mode such as dead reckoning, IMU, visual navigation, radio beacons, LIDAR, etc. The autonomous machine 100 may rely on stored maps (e.g., 3DPC, image features) that were previously mapped by the machine through autonomous or guided exploration and registered to the coordination system (e.g., terrestrial latitude and longitude) used to map the entire work region. The autonomous machine 100 may have preferred or predefined routes through the dead zones 305, 306, and be guided along those routes by comparison of sensor data with the stored map data. The routes may be modified based on changing conditions, e.g., temporary obstacles or stuck areas that are detected through cameras, touch sensors, wheel spin detectors, etc. Similar obstacle adaptations may also be used while traversing the traversal pattern 310 outside the dead zones 305, 306, however may not require any reference to internal maps or other data.

The location and size of the dead zones may be determined in a number of ways. For example, the autonomous machine 100 may determine the dead zones directly while navigating through the work region 300 and determining signal strength (or some other measure of quality) of the wireless geolocation service is below a threshold. This may occur during training or during work, and the autonomous machine 100 may be operating in an autonomous, semi-autonomous or user-guided mode. This loss of signal strength may define one point on a boundary of the dead zone, and the autonomous machine 100 may move away from the dead zone (e.g., back out) or move through until wireless geolocation signal quality is above the threshold. Once at least three points (that are not in a straight line) of the dead zone boundary are determined, a triangular area can be plotted to represent the dead zone. This triangular shape can be expanded as more points are discovered.

Another way the location and size of the dead zones may be determined is via analysis of digital map data. This map data may include, but is not limited to, locations of terrestrial wireless geolocation service transmitters, topological maps that include topologies of one or both of land and permanent structures (e.g., buildings, towers), transmittal locations of possible interfering radio transmitters, analysis of 2D imagery to identify blocking structures or interfering structures (e.g., trees, radio towers), etc. The map data may be used to predict the location and size of dead zones. Other map data may include direct measurements of signal strength (or other measure of transmission quality) that were made during surveys, collected from autonomous machines, mobile devices, etc.

Generally, the prediction of dead zones may be implemented by a centralized service with powerful computers with access to many sources of data. For purposes of this disclosure, this service will be referred to as an operations center (or robot operations center). The operations center is generally a network accessible data service that can communicate with users and autonomous machines and executes code specifically created to manage autonomous machine setup and work operations.

At least one predicted dead zone can be used before the autonomous machine ever traverses the work region, e.g., during training. For example, if the dead zone is on or near a boundary, this could alter the behavior of the machine depending on how the boundary is being learned by the machine. If the autonomous machine is being user propelled (e.g., pushed) on the boundary, then the autonomous machine could start recording visual navigation images before reaching the predicted dead zone and during traversal of the predicted dead zone. If wireless geolocation is in fact lost during the traversal of the predicted dead zone, the visual data could be flagged for further processing later, e.g., used to form a 3PDC of the region. If the wireless geolocation is not lost during the traversal of the predicted dead zone, then this imagery may be kept or discarded, and this result may be sent back to the operations center as feedback to the prediction algorithms, e.g., used as an error to update a machine learning module.

If the dead zone is at an interior part of the work region, then this may be used similarly to the boundary of the interior is traversed under user supervision. If the interior is traversed using autonomous navigation during training, then the machine could slow down before entering the predicted dead zone in case wireless geolocation is lost. If wireless geolocation is in fact lost during the traversal of the predicted dead zone, then the machine could attempt to navigate through the dead zone using a localization input that does not rely on the wireless geolocation service. In another case, the machine could back out or otherwise attempt to avoid the dead zone while autonomously navigating. The machine could at that time or a later time signal to the user that further, manual training may be needed in the dead zone. The machine may perform other operations described above pertaining to manual navigation, e.g., gathering images in anticipation of the dead zone, signaling back to the operations center if no dead zone is found where predicted, etc.

The features and operations above related to dead zones can be applied to any type of zone in which work is required, however difficulties are known or expected, where such difficulties may be unrelated to geolocation. These will be broadly referred to herein as "smart zones," in that a more sophisticated navigation mode and/or path may be needed to traverse the zone. A more detailed explanation of smart zones can be found in U.S. Patent 10,932,409, dated March 2, 2021. In a smart zone, the vehicle travels in a random pattern within a travelling containment zone of a lesser size than the work region. The travelling containment zone may move or travel across the work region such that, over time, the travelling containment zone travels over most all of a working surface of the work region. Smart zones may be used to cover or work dead zones as described above. In one or more other embodiments, smart zones may be used to cover other zones where difficulties are expected based on a number of obstacles per unit of area, steep grades within the zone, ratio of obstacle area to work area, a number of non-boundary turn arounds generated by within a predefined route, an operator definition, a number of times the autonomous machine has previously gotten stuck in the zone, an amount of time per unit of area estimated to work the zone, etc.

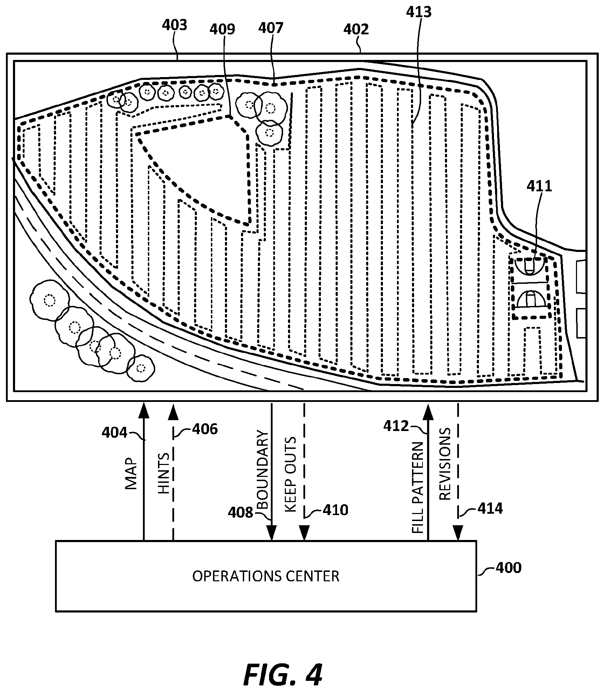

In FIG. 4, a diagram shows details of how an operations center 400 can assist in defining work regions and generating work paths within the work regions. A user device 402 is capable of communicating with the operation center 400 via a wide area network. The operations center 400 can provide a map data 404 to the device usable to display the work region on an electronic display 403. The map data 404 may be provided directly or via a third party, e.g., using a network mapping application program interface. The map data 404 may include vector graphics, aerial photographs (which are understood to include satellite imagery), infrastructure overlays (e.g., road and trail boundaries, building geometry), property boundaries, topological overlays, etc. The map data 404 may be publicly and/or privately sourced.

In addition to the map data 404, the operations center 400 may also provide access to hint data 406 that is developed specifically for autonomous vehicle operations, e.g., to assist in manual and automatic definition of autonomous vehicle work paths. For example, the hint data 406 may include a prediction of wireless geolocation dead zones or smart zones as described above. Other hint data 406 may include prediction of boundaries, work regions, problem areas, etc. The hint data 406 may include closed shapes that are overlaid on the map to indicate problem areas or dead zones. Others hint data 406 may be provided by image processing algorithms that can predict geometry (e.g., work region boundaries) thereby reducing the amount of user inputs to define aspects of the work region.

For example, for a robotic mowing application, the work boundaries are often visible where the turf meets up against a border such as a sidewalk, fence, gravel, etc. These boundaries can readily be detected on an aerial photograph due to changes in color, brightness, texture, etc. Workable regions and problem areas can also be determined within those boundaries, e.g., green areas with relatively little local variation in color/brightness may indicate grass, while green areas with significant local variations in color/brightness may indicate foliage of trees, bushes, or the like.

A user can draw over the boundaries on the electronic display 403 using the color brightness variations as a guide, e.g., using a mouse or touchscreen input. In some embodiments, imaging algorithms (e.g., edge detection) can speed up this process such that the user may be presented with predicted boundary segments based on edge detection of the aerial imaging. Thus, the actual boundary 407 shown in the display may have been drawn by the user or detected by imaging algorithms. In the latter case, the user may select the boundary 407 (or an entire region encompassed by the boundary) to be used by selecting one or more graphical elements (e.g., polylines) on the display 403, and may be able to edit such selected elements using electronic drawing type tools to correct for any idiosyncrasies due to the algorithm. A similar process may be used to define exclusion zones, such as boundaries 409 and 411, which in this example correspond to a baseball diamond and basketball court.

For example, a machine learning algorithm can be trained to recognize, from aerial imagery, known object types such as trees, bushes, playground equipment, utility poles and fixtures, etc. In such a case, an operations center can automatically flag regions that contain these detected objects as possibly being unworkable or problematic. Similar analyses can be used to detect ground coverings, e.g., grass, dirt, rocks, concrete, asphalt, and can guide automatic geometry definition and selection. Convolutional neural networks have been found to be effective at this type of imagery classification and are adaptable to accept non-imagery data such as topological data in training and prediction.

After the user is at least able to view and add a graphical representation of a boundary 407 via the electronic display, boundary data 408 can be communicated to the operations center 400, as well as optional other data such as keep out area data 410 (e.g., defining exclusion zones within the boundary 407). These data 408, 410 may undergo checks, e.g., ensuring boundaries are closed shapes, identification and resolution of intersecting shapes, etc. This may involve additional communications between the operations center 400 and the user device 402, which are not shown here.

Once the geometry of the work region is well-defined and approved by the user, the operations center 400 can define fill pattern data 412 which is sent to the user device 402 and can be rendered as work path 413. The operations center 400 may use other data (not shown) in order to generate the fill pattern data 412, such as a model or serial number of the autonomous machine, which can be used to define machine geometry and other performance data such as turn radius, maximum speed, battery range, etc. Other data used to generate the fill pattern data 412 may include a mode and/or attachments used with the machine (e.g., mowing, edging, debris collection), location of a charging station, etc. This additional data may manually entered during the session via the user device 402 and/or retrieved from a user account.

After the fill pattern data 412 is sent to the user device 402, the user may have another opportunity to edit the work path 413, as indicated by revision data 414. For example, the fill pattern data 412 may include multiple pattern types (e.g., horizontal, vertical, diagonal, random) and the user may decide which one to use. Further, multiple different work paths may be used to work the area in a single session, e.g., to create a crisscross mowing pattern. In other cases, different patterns may be used at different times, e.g., alternating the pattern each week to even out the cutting, pattern for special events (e.g., holiday themed pattern).

Note that both the boundary data 408 and the fill pattern data 412 may be estimates at this stage. Even with carefully placed graphical elements, the variation between what is registered on the map and the actual on-site locations could vary by up to a meter. Therefore, this map-created estimated geometry may be considered as a general guideline. In some cases, the machine may not need to closely approach the boundary during work (e.g., does not get closer to the boundaries than the expected placement error during boundary creation), in which case a work traversal path can be generated and validated without any further refinement of the boundary definitions. In other cases, a more accurate representation of the boundary may be desired, which can be accomplished by a traversal of the autonomous machine over the work region. For example, the user may place the autonomous machine in the work region, and indicate, e.g., to the autonomous machine or the operations center, that the machine will be traversing one of the boundaries 407, 409, 411 that were previously defined. This is described below as a boundary validation phase.

When traversing the approximate boundaries during the validation phase, the autonomous machine may be under user supervision. In one example, the user may control the autonomous machine directly, e.g., through wired or wireless controller (e.g., custom controller, smart phone), by riding on or pushing the machine, by walking the boundary and having the machine follow (e.g., using visual sensors and/or proximity detecting sensors) and record the boundary. While a manual traversal of the boundary may be unnecessary for large, featureless, boundaries, manual assistance may still be used for small and or complex regions. Other methods described herein can be used to validate larger and less complex boundaries.

For example, in one or more embodiments, the autonomous machine may attempt to traverse the estimated boundaries that were previously defined, either as-defined without any adjustment or by using the estimated boundaries as-defined and making corrections based on sensor inputs such as bump sensors to detect obstacles and visual sensors to track border features (e.g., line tracking mode). In this case, the user may follow along with a controller and only provide inputs as needed, e.g., causing the machine to stop if it is too far away from the desired boundary, about to hit an obstacle, etc. This stopping of the machine can be followed by manual corrections to correct the error, and the machine can resume traversing the approximate route and the next closest point. Such corrections may also be made without stopping the machine, e.g., made while still moving.

Once a more accurate boundary is defined in the boundary validation phase, this measured data can replace the estimated version stored on the autonomous machine and/or at the operations center. The storage of the validated boundaries can also trigger a reworking of the automatic traversal path(s) 413 to conform to the validated boundaries. After the automatic traversal path is reformulated to correspond to the validated boundaries, it can be validated either with or without the work implement. This work path validation may be a final step before allowing full autonomous operation, e.g., to find any further issues with the work region, e.g., stuck areas, dead zones.

Note that predicted dead zones or problem areas may also be defined as part of the boundary definition and path generation described in relation to FIG. 4. The boundaries of the dead zones may not need validation, however the machine may need to gather navigation data in those zones (e.g., before or during work path validation) so that they can be navigated through later if geolocation is lost. In one embodiment, e.g., before work path validation, the user may navigate the machine to the location of the predicted dead zones and problem areas and initiate a training phase to gather additional data. This additional data may include building a 3DPC of the dead zone build using cameras and SLAM, random traversal to identify obstacles, etc. The data gathering in the dead zones can be done under user guidance using techniques similar to the boundary validation described above, e.g., direct control, user follow along, autonomous movement with user correction.

During the validation of the boundaries described above and/or during final test of the traversal path, additional dead zones and/or problem areas may be discovered, in which case these dead zones and/or problem areas may be traversed with user guidance to gather additional navigation and mapping data. For example, before allowing the final test of the traversal path, problem areas and dead zones that are already known or predicted can be mapped by the autonomous machine under user guidance. During the final test of the traversal path, any other problem areas and dead zones that are discovered may cause the machine to stop and request the user supervise additional mapping. Note that a single smart zone can run inside a dead zone which would map out any obstacles in that area. This allows for future path planning options because it can discover where all the trees are, for example. This assumes that within the dead zone any exclusion zones were mapped so the mower could navigate freely inside the area.

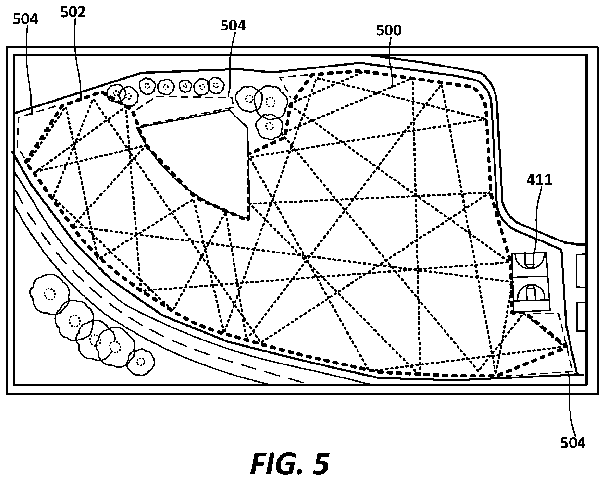

Note that the embodiment described in FIG. 4 may involve the user first analyzing the work region via a digital map to manually and/or automatically define at least some of the boundary geometry, and this geometry can be subsequently validated using a traversal of the machine over the work region. In FIG. 5, a diagram shows an alternate way to determine boundaries, using the same work region as shown in FIG. 4.

In this example, the user drives/moves the autonomous machine to the work region. The autonomous machine may be in network communication with the operations center at this time, although it may not be necessary. Once the user has placed the machine within a workable part of the work region, the user initiates as random capture mode. In random capture mode, the autonomous machine drives forward until one of the following happens: the machine bumps into obstacle; the user stops the machine when reaching a boundary or hazard/obstacle (e.g., dead-man switch); or the user ends random capture mode. For the first two cases, the autonomous machine rotates by a random amount (e.g., by an angle greater than 60°) and continues forward on a new path until stopped again. The user may take over and record at any time, e.g., by directly controlling the machine, and the user may be prompted or required to take over during wireless geolocation outages, in which case a dead zone is registered and the autonomous machine may perform video recording to build a navigation database (e.g., 3DPC) for the region. A similar sequence of events may occur if the machine gets stuck while traversing a path.

While moving, the autonomous machine logs its location, and may log other data, e.g., geolocation system signal strength, indications of mobility difficulties (e.g., high motor current, speed lower or higher than desired), etc. Even if this gathered data does not result in a dead zone or problem area, it could still be valuable data for the purposes of machine learning. In FIG. 5, the path 500 illustrates an example path that may be traversed and recorded this way.

As more and more points are captured, a map of the area is created and updated. The map can be locally stored and/or sent to the operations center. The map data may also be downloaded to the user's device. For example, turn around points on the path 500 can be connected to form an estimated boundary 502. Once the user is satisfied with the definition of the map, the user can terminate capture mode. The user may still be able to edit the map. For example, extensions 504 may be added to the boundary using a graphics tool, e.g., stretching the estimated boundary 502, drawing new segments, etc. This can account for areas not traversed during random capture but that the user would still want covered during work cycle. These boundaries can be used to generate fills as described above. Depending on the extent of the random capture, a validation of boundary and/or the fill path may not be needed, e.g., if enough area was covered during random capture that a reasonably compute map of the work area was developed.

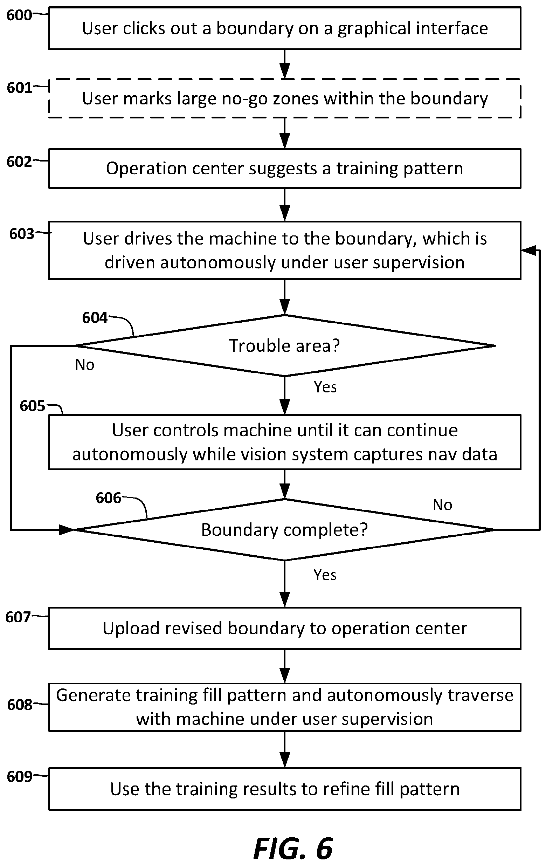

In FIGS. 6-8, flowcharts illustrate work map generation according to various example embodiments. In FIG. 6, a method is illustrated for work map generation via a user device according to an example embodiment. The method involves facilitating user selection of an estimate of the boundary, which in this case involves the user clicking 600 out a boundary on a device, e.g., either a standalone device or via a service on an operations center. The user may optionally mark 601 large keep-away zones within a boundary (e.g., water hazards, concrete slabs, etc.) using similar user interface mechanisms. The operations center suggests 602 a training pattern, although this may also be locally generated on a user device. This provides an estimate of the boundaries that will be validated on-site using the autonomous machine.

Once on site, the user drives 603, pushes, moves, or otherwise directs the autonomous machine to the boundary. The boundary is driven autonomously by the machine (e.g., using geolocation service) with user supervision (e.g., dead-man switch to stop execution, active position adjustment and correction). In order to reduce the amount of work required of the user, the user can make a single correction and the machine can attempt to derive the rest of a boundary segment on its own. For example, if the estimated boundary is parallel to the actual boundary but offset, the user can bias or shift the machine's traversal boundary during autonomous operation using remote, e.g., bias 5 cm to left of boundary. The machine makes that adjustment so the user can visually verify boundary alignment, and the adjustment is maintained until a new waypoint is reached. After the new waypoint is reached, the bias is returned to zero and the machine again traverses the estimated boundary.

If a trouble area is detected 604, the autonomous machine may stop automatically and inform the user. The user remote controls 605 (or directly controls) the autonomous machine along the boundary until it can continue autonomously. The vision system can capture necessary data while under control 605, and may involve more than one pass through the affected area, e.g., in a different direction, to gather sufficient data.

Once the boundary has been traversed (block 606 returns 'yes'), any adjustments are recorded and re-uploaded 607 to the operations center (or to a locally coupled computing device). For the next phase of training, the operations center (or locally coupled computing device) generates 608 and provides a training fill pattern. The user then user places the autonomous machine in the work region (e.g., along the boundary) and the training fill pattern is executed by the machine. Similar to the boundary definition phase, in areas where geolocation fails while executing the fill pattern, the user can manually continue the pattern similar to step 605. If an obstacle is bumped into, the user may guide the machine around the obstacle or the machine's own obstacle avoidance algorithms may be used. In another embodiment, the mower could attempt map an obstacle that is within the working area instead of trying to avoid it. For example, a perimeter around a tree or edge of a retaining wall can be mapped by bumping or sensing its way around the object automatically. If machines own obstacle avoidance algorithms are sufficient to manage most obstacles, case the user may let the machine traverse the fill pattern itself, summoning the user if an unresolved problem arises, e.g., machine becomes stuck. These results (adjustments, obstacles, etc.) are uploaded, e.g., to the operations center or computing device and used to refine 609 the fill pattern for working the region.

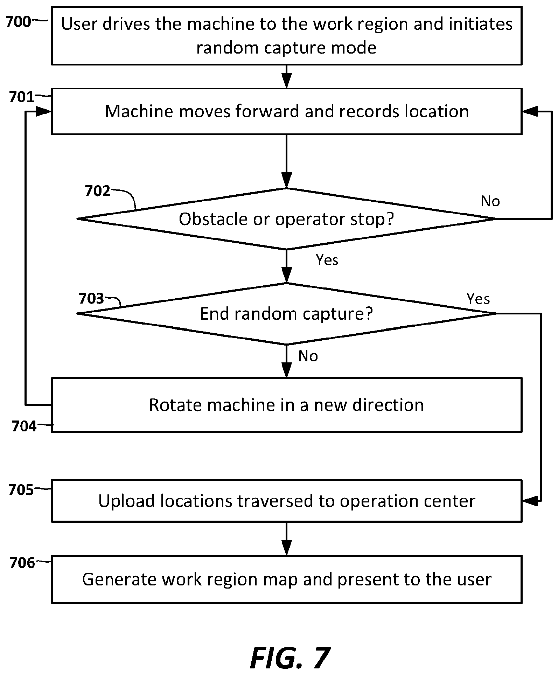

In FIG. 7, a flow diagram shows an example of random work region mapping according to an example embodiment. The user drives/moves 700 the robot to the work region and initiates random capture mode. The machine moves 701 forward until one of the following events 702 is detected: the machine bumps into and obstacle or the user stops the machine, e.g., when the machine reaches a boundary or a hazard. If the operator stop is not accompanied by a command to end the random capture at block 703, then the machine will rotate 704 in a new direction and moves 701 forward again.

When the user ends random capture mode (block 703 returns 'yes'), the locations that were traversed are uploaded 705 to the operations center or a local computing device. Note that this uploading 705 may instead occur continuously or occasionally while traversing the route instead of the end of random capture. The location date is used to generate 706 a map of the area (e.g., boundaries or work area, exclusion zones, dead zones) which can be presented to the user (e.g., sent to the user's mobile device). This may be followed by user revision of the map by additional traversal of selected areas, editing of the map via an electronic display, etc. Additional steps may be performed as shown in FIG. 6, e.g., generating and refining 608, 609 a fill pattern.

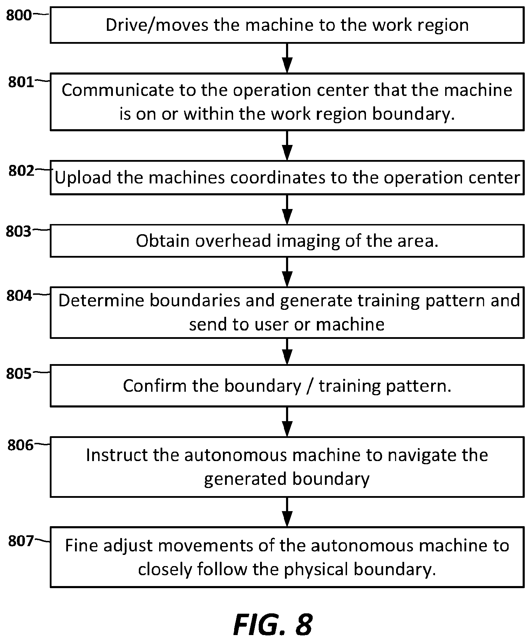

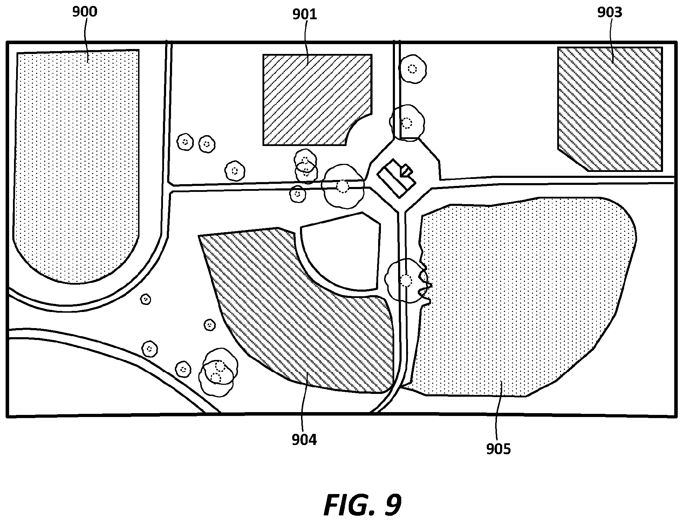

In FIG. 8, a flow diagram shows an example of cloud-assisted work region mapping according to an example embodiment. The user drives/moves 800 the autonomous machine to the work region and communicates 801 to the operation center (e.g., using a mobile device) that the machine is on or within the work region boundary. The machines coordinates are uploaded 802 to the operation center, which uses service to obtain 803 overhead imaging of the area. Detection algorithms are used to determine 804 the boundaries for different regions, e.g., grass, sidewalks, asphalt, foliage, etc., and an estimated training pattern is generated. In FIG. 9, a diagram shows an example of autodetected boundary regions 900-905, with different shading indicating possibly different characteristics of each region. The boundaries and/or training patterns are downloaded to the autonomous machine or the user device. The user confirms 805 the boundary/training pattern and instructs 806 the autonomous machine navigate the generated boundary. As with other embodiment, the use can fine adjust 807 movements of the autonomous machine to more closely follow the physical boundary.

As with previous embodiments, areas in the work region where geolocation is unavailable are traversed by operator control (with automatic image capture for vision training), dead reckoning, and/or random navigation. Any bumped obstacles are automatically traversed, and the boundary is adjusted. A wall following algorithm or operator control may be used to move around obstacles. Once the boundary is complete the training pattern is run, obstacles are automatically traversed and mapped. Either a wall following algorithm or operator controlled around obstacles. Vision mapped areas are generated on the autonomous machine (e.g., 3PPC generated) for later execution. Boundary adjustments / mappings can be uploaded to the operations center to generate fill patterns.

While the present disclosure is not so limited, an appreciation of various aspects of the disclosure will be gained through a discussion of the specific illustrative examples provided below. Various modifications of the illustrative examples, as well as additional embodiments of the disclosure, will become apparent herein.

Example 1 is a method, comprising: defining a boundary of a work region in which an autonomous machine is to operate; defining a dead zone in the work region wherein a loss of a wireless geolocation service is known or predicted; autogenerating a traversal pattern within the boundary; causing the autonomous machine to execute the traversal pattern to perform work using the wireless geolocation service to navigate outside of the dead zone; and when encountering the dead zone before, during, or after executing the traversal pattern, prioritizing a localization input that does not rely on the wireless geolocation service to perform the work in the dead zone.

Example 2 includes the method of example 1, wherein the localization input comprises image-based localization using a three-dimensional point cloud. Example 3 includes the method of example 1 or 2, wherein the autonomous machine navigates along a plurality of random paths while in the dead zone. Example 4 includes the method of example 1, 2, or 3, wherein the dead zone is encountered while executing the traversal pattern, the method further comprising, when the work in the dead zone is complete, continuing to execute the traversal pattern to perform the work using the wireless geolocation service to navigate.

Example 5 includes the method of example 1, 2, or 3, wherein the dead zone is encountered before or after executing the traversal pattern, and wherein the wireless geolocation service is used to navigate to the dead zone before or after completing the traversal pattern. Example 6 includes the method of any preceding example, wherein defining the boundary comprises: navigating the autonomous machine along the boundary under user supervision; and defining the boundary based on a path traversed during the navigation of the estimate of the boundary.

Example 7 includes the method of example 6, wherein navigating the boundary under user supervision comprises, pushing, driving, or towing the autonomous machine. Example 8 includes the method of any one of examples 1-5, wherein defining the boundary comprises: facilitating user selection of an estimate of the boundary via an image on an electronic map of the work region; moving the autonomous machine to the work region; autonomously navigating the autonomous machine along the estimate of the boundary under user supervision; and defining the boundary based on a path traversed during the navigation of the estimate of the boundary.

Example 9 includes the method of example 8, wherein autonomously navigating the autonomous machine along the estimate of the boundary under the user supervision involves the user correcting the autonomous machine while the autonomous machine moves along the estimate of the boundary such that the path traversed conforms to an on-site boundary. Example 10 includes the method of example 8, further comprising in response to determining a problem area while autonomously navigating the autonomous machine along the estimate of the boundary, stopping autonomous navigation and facilitating user guidance of the autonomous machine through the problem area.

Example 11 includes the method of example 10, wherein, during the user guidance of the autonomous machine through the problem area, the autonomous machine records camera imagery that is stored on the autonomous machine and used to geolocate features in the camera imagery, the geolocated features being used for subsequent navigation in the local navigation mode when performing the work at or near the problem area. Example 12 includes the method of example 10, wherein the problem area is determined based on an inability of the autonomous machine to autonomously navigate through obstacles in the problem area. Example 13 includes the method of example 10, wherein the problem area is automatically determined based image analysis of the electronic map at an operations center.

Example 14 includes the method of example 8, wherein facilitating the user selection of the estimate of the boundary via the image on the electronic map of the work region comprises: performing an image analysis of the image to determine workable regions with similar image properties; presenting the workable regions as an overlay on the electronic map; and receiving a user selection of one or more of the workable regions, a geometry of one or more workable regions being used to define the estimate of the boundary.

Example 15 includes the method of example 14, wherein the image analysis further determines a problem area in the work region, the method further comprising, while autonomously navigating the autonomous machine along the estimate of the boundary, stopping autonomous navigation and facilitating user guidance of the autonomous machine through the problem area. Example 16 includes the method of example 15, wherein the problem area is determined based on determining non-workable regions having features corresponding to known obstacle types. Example 17 includes the method of example 1, wherein the dead zone of the work region is automatically defined by an image analysis of an electronic map.

Example 18 includes the method of any preceding example, wherein defining the dead zone comprises: autonomously navigating the autonomous machine along the traversal pattern during operation of the autonomous machine; and in response to the loss of the wireless geolocation service in the dead zone, defining a geometry of the dead zone. Example 19 includes the method of example 18, further comprising, in response to the loss of the wireless geolocation service in the dead zone, stopping autonomous navigation and facilitating user guidance of the autonomous machine through the dead zone. Example 20 includes the method of example 18, further comprising, in response to the loss of the wireless geolocation service in the dead zone, the autonomous machine records camera imagery that is stored on the autonomous machine, the camera imagery being used for subsequent navigation through the dead zone in the local navigation mode when performing the work in the dead zone.

Example 21 includes the method of example 18, wherein the geometry of the dead zone is transmitted to an operations center and associated with a geometry of the work region, the geometries of the dead zone and the work region used to train a prediction algorithm. Example 22 includes the method of any preceding example, wherein defining the dead zone comprises: autonomously navigating the autonomous machine along the traversal pattern while working the work region of the autonomous machine; and in response to the loss of the wireless geolocation service in the dead zone, defining a geometry of the dead zone. Example 23 includes the method of example 22, further comprising, while attempting to navigate the dead zone, recording camera imagery that is stored on the autonomous machine, the camera imagery being used for subsequent navigation through the dead zone in the local navigation mode when performing the work in the dead zone.

Example 24 includes the method of any preceding example, wherein defining the boundary comprises: moving the autonomous machine to the work region; autonomously navigating the autonomous machine along a plurality of random paths, each of the random paths terminated when an obstacle is encountered or a user commands the autonomous machine to stop; determining estimated boundaries based on endpoints of the plurality of random paths; presenting estimated boundaries to the user via an electronic map of the work region; and defining the boundary based on a selected one of the estimated boundaries that is acceptable to the user.

Example 25 includes the method of example 24, wherein problem areas within the boundary are also defined based on the selected estimated boundaries. Example 26 includes the method of example 24, wherein defining the dead zone comprises in response to a loss of the wireless geolocation service along one of the random paths, defining a geometry of the dead zone. Example 27 includes the method of example 26, further comprising, while moving through the dead zone, recording camera imagery by the autonomous machine that is stored on the autonomous machine, the camera imagery being used for subsequent navigation through the dead zone in the local navigation mode when performing the work in the dead zone. Example 28 includes the autonomous machine as set forth in any preceding example comprising a processor operable to perform the method of any preceding example.

While the present disclosure is not so limited, an appreciation of various aspects of the disclosure will be gained through a discussion of the specific illustrative aspects provided below. Various modifications of the illustrative aspects, as well as additional aspects of the disclosure, will become apparent herein.

It is noted that the terms "have," "include," "comprises," and variations thereof, do not have a limiting meaning, and are used in their open-ended sense to generally mean "including, but not limited to," where the terms appear in the accompanying description and claims. Further, "a," "an," "the," "at least one," and "one or more" are used interchangeably herein. Moreover, relative terms such as "left," "right," "front," "fore," "forward," "rear," "aft," "rearward," "top," "bottom," "side," "upper," "lower," "above," "below," "horizontal," "vertical," and the like may be used herein and, if so, are from the perspective shown in the particular figure, or while the machine is in an operating configuration. These terms are used only to simplify the description, however, and not to limit the interpretation of any embodiment described. As used herein, the terms "determine" and "estimate" may be used interchangeably depending on the particular context of their use, for example, to determine or estimate a position or pose of a vehicle, boundary, obstacle, etc.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any range within that range.

The various embodiments described above may be implemented using circuitry, firmware, and/or software modules that interact to provide particular results. One of skill in the arts can readily implement such described functionality, either at a modular level or as a whole, using knowledge generally known in the art. For example, the flowcharts and control diagrams illustrated herein may be used to create computer-readable instructions/code for execution by a processor. Such instructions may be stored on a nontransitory computer-readable medium and transferred to the processor for execution as is known in the art. The structures and procedures shown above are only a representative example of embodiments that can be used to provide the functions described hereinabove.

The foregoing description of the example embodiments has been presented for the purposes of illustration and description. It is not intended to be exhaustive or to limit the embodiments to the precise form disclosed. Many modifications and variations are possible in light of the above teaching. Any or all features of the disclosed embodiments can be applied individually or in any combination and are not meant to be limiting, but purely illustrative. It is intended that the scope of the invention be limited not with this detailed description, but rather determined by the claims appended hereto.
The following are the claims of the parent application as filed and are included as part of the description of the present divisional application.
1. A method, comprising:
   defining a boundary of a work region in which an autonomous machine is to operate;
   defining a dead zone in the work region wherein a loss of a wireless geolocation service is known or predicted;
   autogenerating a traversal pattern within the boundary;
   causing the autonomous machine to execute the traversal pattern to perform work using the wireless geolocation service to navigate outside of the dead zone; and
   when encountering the dead zone before, during, or after executing the traversal pattern, prioritizing a localization input that does not rely on the wireless geolocation service to perform the work in the dead zone.
2. The method of claim 1, wherein the localization input comprises image-based localization using a three-dimensional point cloud.
3. The method of claim 1 or 2, wherein the autonomous machine navigates along a plurality of random paths while in the dead zone.
4. The method of claim 1, 2, or 3, wherein the dead zone is encountered while executing the traversal pattern, the method further comprising, when the work in the dead zone is complete, continuing to execute the traversal pattern to perform the work using the wireless geolocation service to navigate.
5. The method of claim 1, 2, or 3, wherein the dead zone is encountered before or after executing the traversal pattern, and wherein the wireless geolocation service is used to navigate to the dead zone before or after completing the traversal pattern.
6. The method of any preceding claim, wherein defining the boundary comprises:
   navigating the autonomous machine along the boundary under user supervision; and
   defining the boundary based on a path traversed during the navigation of the estimate of the boundary.
7. The method of claim 6, wherein navigating the boundary under user supervision comprises, pushing, driving, or towing the autonomous machine.
8. The method of any one of claims 1-5, wherein defining the boundary comprises:
   facilitating user selection of an estimate of the boundary via an image on an electronic map of the work region;
   moving the autonomous machine to the work region;
   autonomously navigating the autonomous machine along the estimate of the boundary under user supervision; and
   defining the boundary based on a path traversed during the navigation of the estimate of the boundary.
9. The method of claim 8, wherein autonomously navigating the autonomous machine along the estimate of the boundary under the user supervision involves the user correcting the autonomous machine while the autonomous machine moves along the estimate of the boundary such that the path traversed conforms to an on-site boundary.
10. The method of claim 8, further comprising in response to determining a problem area while autonomously navigating the autonomous machine along the estimate of the boundary, stopping autonomous navigation and facilitating user guidance of the autonomous machine through the problem area.
11. The method of claim 10, wherein, during the user guidance of the autonomous machine through the problem area, the autonomous machine records camera imagery that is stored on the autonomous machine and used to geolocate features in the camera imagery, the geolocated features being used for subsequent navigation in the local navigation mode when performing the work at or near the problem area.
12. The method of claim 10, wherein the problem area is determined based on an inability of the autonomous machine to autonomously navigate through obstacles in the problem area.
13. The method of claim 10, wherein the problem area is automatically determined based image analysis of the electronic map at an operations center.
14. The method of claim 8, wherein facilitating the user selection of the estimate of the boundary via the image on the electronic map of the work region comprises:
   performing an image analysis of the image to determine workable regions with similar image properties;
   presenting the workable regions as an overlay on the electronic map; and
   receiving a user selection of one or more of the workable regions, a geometry of one or more workable regions being used to define the estimate of the boundary, wherein the image analysis further determines a problem area in the work region, the method further comprising, while autonomously navigating the autonomous machine along the estimate of the boundary, stopping autonomous navigation and facilitating user guidance of the autonomous machine through the problem area, wherein the problem area is determined based on determining non-workable regions having features corresponding to known obstacle types.
15. The autonomous machine as set forth in any preceding claim comprising a processor operable to perform the method of any preceding claim.

## Claims

1. A method, comprising:
defining a boundary of a work region in which an autonomous machine is to operate;
determining a dead zone in the work region wherein a loss of a wireless geolocation service is known or predicted;
autogenerating a traversal pattern within the boundary;
causing the autonomous machine to execute the traversal pattern to train in the work region or to perform work in the work region, the autonomous machine using the wireless geolocation service to navigate outside of the dead zone; and
when encountering the dead zone before, during, or after executing the traversal pattern, the autonomous machine prioritizing a localization input that does not rely on the wireless geolocation service to navigate in the dead zone.

2. The method of claim 1, wherein the localization input comprises image-based localization using a three-dimensional point cloud.

3. The method of claim 1 or 2, wherein the autonomous machine navigates along a plurality of random paths while in the dead zone.

4. The method of any one of the preceding claims, wherein the dead zone is encountered while executing the traversal pattern, the method further comprising, when the navigation in the dead zone is complete, continuing to execute the traversal pattern to train in the work region or to perform work in the work region, the autonomous machine using the wireless geolocation service to navigate outside of the dead zone.

5. The method of any one of claims 1 to 3, wherein the dead zone is encountered before or after executing the traversal pattern, and wherein the wireless geolocation service is used to navigate to the dead zone before or after completing the traversal pattern.

6. The method of any one of the preceding claims, wherein determining the dead zone comprises predicting a location and size of the dead zone using map data before the autonomous machine traverses the work region.

7. The method of claim 6, wherein the map data comprises one or more of: locations of terrestrial wireless geolocation service transmitters, topological maps that include topologies of one or both of land and permanent structures, transmittal locations of possible interfering radio transmitters, and analysis of 2D imagery to identify blocking structures or interfering structures.

8. The method of claim 6 or 7, wherein the dead zone is provided as hint data from an operations center, the hint data comprising a closed shape overlaid on a map to indicate the dead zone.

9. The method of any one of the preceding claims, wherein autogenerating the traversal pattern comprises modifying the traversal pattern with a segment that traverses an outer boundary of the dead zone.

10. The method of claim 9, wherein the autonomous machine finishes the traversal pattern without entering the dead zone and then navigates back to the dead zone, wherein the wireless geolocation service is used to navigate to an edge of the dead zone and the localization input is used to navigate in the dead zone.

11. The method of any one of claims 1 to 8, wherein the traversal pattern is plotted through the dead zone with breakpoints at a border of the dead zone.

12. The method of claim 11, wherein the autonomous machine switches to a local navigation mode at an edge of the dead zone and attempts to remain on a path that joins the breakpoints.

13. The method of any one of the preceding claims, wherein the localization input comprises visual navigation using stored maps comprising one or both of a three-dimensional point cloud and image features, the stored maps having been previously mapped by the autonomous machine through autonomous and/or guided exploration and having been registered to a coordination system used to map the work region.

14. The method of any one of the preceding claims, wherein prioritizing the localization input comprises giving greater weighting to the localization input if already using the localization input, switching on the localization input if not already using the localization input, or relying solely on the localization input.

15. An autonomous machine comprising a processor (124) configured to perform the method of any one of the preceding claims.
